# DEMANDE DE BREVET EUROPEEN

(11) **EP 4 567 755 A1**
(43) Date de publication de la demande: **11.06.2025**
(21) Numéro de dépôt: 24188522.7
(22) Date de dépôt: 15.07.2024
(51) Int. Cl.: G06V 40/13

(54) **PROCÉDÉ ET SYSTÈME DE CAPTURE SANS CONTACT D'EMPREINTE BIOMÉTRIQUE**

(30) Priorité: 05.12.2023 FR 2313552
(71) Demandeur: IDEMIA Public Security France, 92400 Courbevoie (FR)
(72) Inventeur: MALEK, Mokrane, 92400 COURBEVOIE (FR); FOURRE, Joël-Yann, 92400 COURBEVOIE (FR); LE GOUIL, Elise, 92400 COURBEVOIE (FR); BEZOT, Grégoire, 92400 COURBEVOIE (FR)
(74) Mandataire: IPS

(57) **Abrégé**

Procédé de capture sans contact d'empreinte biométrique d'une partie de main (M) d'un utilisateur dans un volume d'acquisition, le procédé comportant les étapes de:
- acquisitions successives d'au moins deux images bidimensionnelles de la partie de main, avec entre lesdites acquisitions successives une modification d'orientation d'un plan objet par rotation autour d'un axe pivot (Ap) ; lesdites au moins deux images comportant des points imagés de la partie de main communs auxdites au moins deux acquisitions ; ledit plan objet étant modifié en fonction d'une modification d'un plan courant déterminé de positionnement (P) de la partie de main, correspondant au plan courant moyen dans lequel se situe ladite partie de main, pour chaque acquisition d'image bidimensionnelle;
- fusion des images bidimensionnelles acquises d'une surface à représenter de ladite partie de main.

## Description

La présente invention concerne le domaine de l'acquisition sans contact des empreintes biométriques. Plus particulièrement, l'invention s'intéresse à l'acquisition d'une empreinte biométrique d'une partie de main d'un individu telle que la paume de la main, des doigts de la main, des pouces de chaque main ou la main entière, ainsi qu'à la génération d'une image de synthèse représentant la surface de la partie de main.

Il est connu de l'état de la technique des procédés de capture d'empreinte biométrique sans contact de doigts d'individu avec génération d'une image de synthèse de doigt en vue de l'obtention d'un déroulé ongle à ongle. Le problème de ces procédés est qu'ils nécessitent la capture bidimensionnelle simultanée sous différents angles des doigts, si bien que le système sans contact pour mettre en oeuvre ce type de procédé doit comporter de multiples dispositifs de prise de vue, ce qui le rend particulièrement onéreux, encombrant et complexe.

L'invention vise à résoudre les problèmes susmentionnés de l'état de la technique en proposant un procédé de capture sans contact d'empreinte biométrique permettant de générer de manière fiable un modèle tridimensionnel représentant la surface de la partie de main qui soit compact, efficace et simple

Selon un aspect de l'invention, il est proposé un procédé de capture sans contact d'empreinte biométrique d'une partie de main d'un utilisateur dans un volume d'acquisition, ledit procédé comportant les étapes suivantes :
- éclairage du volume d'acquisition de manière à éclairer la partie de main de l'utilisateur ;
- acquisitions successives d'au moins deux images bidimensionnelles de la partie de main, avec entre lesdites acquisitions successives desdites au moins deux images une modification d'orientation d'un plan objet par rotation autour d'un axe pivot ; lesdites au moins deux images comportant des points imagés de la partie de main communs auxdites au moins deux acquisitions ; ledit plan objet étant modifié en fonction d'une modification d'un plan courant déterminé de positionnement de la partie de main, correspondant au plan courant moyen dans lequel se situe ladite partie de main, pour chaque acquisition d'image bidimensionnelle;
- fusion des images bidimensionnelles acquises d'une surface à représenter de ladite partie de main

Ce qui permet d'augmenter la surface d'image acquise sans multiplier le nombre de caméras et en sortie du dispositif, de délivrer une image interopérable avec des systèmes existants, ce qui est notamment obtenu en permettant d'orienter l'acquisition d'image bidimensionnelle par rotation du plan objet autour de l'axe pivot de manière à imager ladite partie de main en faisant correspondre son plan courant moyen de positionnement avec le plan objet.

Avantageusement, la fusion comporte une étape de mise en correspondance des points imagés communs entre lesdites au moins deux images bidimensionnelles acquises.

Dans un mode de réalisation, le procédé comporte, pour au moins une image bidimensionnelle acquise,
une étape de détermination d'information tridimensionnelle de localisation de ladite partie de main acquise dans ladite image bidimensionnelle ;
et une étape d'association entre l'information tridimensionnelle de localisation déterminée et ladite image bidimensionnelle acquise.
Ce qui permet, pour au moins une, au moins une partie, ou encore chaque image bidimensionnelle acquise, de déduire la localisation tridimensionnelle de ladite partie de main dans le volume d'acquisition, les informations tridimensionnelles servant en premier lieu à identifier le plan courant dans lequel la main est positionnée, ce qui apporte une aide avantageuse lors de la fusion.

De manière avantageuse, la partie de main comporte au moins deux doigts ou une paume de main ; la surface à représenter s'étendant respectivement d'un premier bord d'ongle à un deuxième bord d'ongle via la pulpe de chaque doigt ou d'un premier bord de la paume à un deuxième bord de la paume via une face palmaire de la main, ce qui permet d'imager aussi bien des empreintes digitales que palmaires, y compris la paume de l'écrivain.

Avantageusement, le procédé comporte une étape de reconstitution d'une image déroulée de la surface à représenter de la partie de main par utilisation de l'information tridimensionnelle déterminée associée à l'image bidimensionnelle acquise, ce qui permet une obtention simple du déroulé de ladite surface à représenter de la partie de main.

De manière avantageuse, la modification de l'orientation dudit plan objet par rotation autour de l'axe de pivot est obtenue par rotation du plan image autour d'un axe de rotation, ce qui permet une mise en oeuvre simple par exemple par mise en rotation du capteur optique sur lequel le plan image est réalisé.

Avantageusement, la modification de l'orientation dudit plan objet est conditionnée par une détection de modification du plan de positionnement courant de la partie de main depuis la précédente acquisition d'image bidimensionnelle.

Dans un mode de réalisation, le procédé comporte une étape de guidage de l'utilisateur invitant à un changement du plan de positionnement courant de la main de l'utilisateur vers un autre plan de positionnement suggéré de la main de l'utilisateur, notamment par affichage de positions de main virtuelle, lesdites positions de main virtuelle reflétant une rotation en roulis de ladite main virtuelle autour de l'axe pivot par rapport plan de positionnement courant de la main de l'utilisateur.

Avantageusement, ledit autre plan de positionnement de la main de l'utilisateur est suggéré de manière à ce que lors des acquisitions successives les plans successifs de positionnement déterminés décrivent une plage de balayage angulaire en roulis d'au moins 10°, préférentiellement 15°, ce qui permet d'assister l'utilisateur de manière à ce qu'il positionne sa main dans des configurations idéales pour acquérir la surface à imager la plus importante en un temps minimum.

De manière avantageuse, pour l'image bidimensionnelle acquise l'étape de détermination du plan de positionnement courant de la partie de main est réalisée par analyse de l'information tridimensionnelle associée à ladite image bidimensionnelle acquise, ce qui permet de se servir des informations tridimensionnelles pour aider à la localisation.

Selon un autre aspect de l'invention, il est proposé un moyen de stockage non transitoire d'informations, amovible ou non, partiellement ou totalement lisible par un ordinateur ou un microprocesseur comportant des instructions de code d'un programme d'ordinateur pour l'exécution de chacune des étapes du procédé selon l'invention, ce qui permet la mise en oeuvre du procédé selon l'invention notamment via un programme d'ordinateur comprenant des instructions adaptées à la mise en oeuvre de chacune des étapes du procédé selon l'invention lorsque ledit programme est exécuté sur un ordinateur.

Selon un autre aspect de l'invention, il est proposé un système de capture sans contact d'empreinte biométrique d'une partie de main d'un utilisateur comprenant un compartiment utilisateur délimitant un volume d'acquisition et un compartiment électronique, le volume d'acquisition étant adapté pour recevoir ladite partie de main de l'utilisateur, le compartiment électronique comprenant :
- un moyen d'éclairage du volume d'acquisition de manière à éclairer la partie de main de l'utilisateur ;
- un dispositif d'imagerie bidimensionnel d'axe d'imagerie fixe, comprenant au moins deux éléments optiques dont un capteur et un objectif, l'un des deux éléments optiques étant mobile en rotation autour de l'axe de rotation du dispositif d'imagerie bidimensionnel, ledit dispositif d'imagerie étant apte à acquérir successivement au moins deux images de la partie de main, avec entre lesdites acquisitions successives desdites au moins deux images une modification d'orientation d'un plan objet par rotation autour d'un axe pivot et obtenue par rotation dudit élément optique mobile;
ledit système de capture comprenant également :
- un module de détermination du plan de positionnement de la partie de main, correspondant au plan courant moyen dans lequel se situe ladite partie de main;
- un module de modification du plan objet en fonction d'une modification du plan courant déterminé de positionnement de la partie de main pour chaque acquisition d'image bidimensionnelle ;
- un module de fusion des images bidimensionnelles acquises d'une surface à représenter de ladite partie de main .

Dans un mode de réalisation, l'élément optique mobile en rotation est le capteur.

Dans un mode de réalisation, l'axe pivot est orienté selon une direction longitudinale du volume d'acquisition et passe notamment par un point central du volume d'acquisition, ce qui permet un mouvement de roulis en partant d'une main à plat, ce qui est ergonomiquement aisé.

Avantageusement, l'angle d'orientation du capteur est prédéterminé en fonction d'un paramètre optique, tel qu'une focale de l'objectif ou une distance entre un centre de symétrie du volume d'acquisition et un centre du capteur, et du grandissement optique du dispositif d'imagerie bidimensionnel.

De manière avantageuse, le système de capture comporte :
- un dispositif d'acquisition tridimensionnelle d'informations tridimensionnelles du volume d'acquisition ;
- un module de de détermination d'information tridimensionnelle de localisation de ladite partie de main dans au moins une image bidimensionnelle acquise
- un module d'association entre l'information tridimensionnelle de localisation déterminée et ladite image bidimensionnelle acquise;
- un module de reconstitution d'une image déroulée de la surface à représenter de la partie de main par utilisation de l'information tridimensionnelle déterminée associée à l'image bidimensionnelle acquise.

Avantageusement, le dispositif d'imagerie bidimensionnel d'axe d'imagerie fixe comprend un capteur unique et un objectif unique.

De manière avantageuse, pour chaque plan courant déterminé de positionnement, le plan de l'élément optique mobile est modifié par rotation autour de l'axe de rotation dudit élément optique mobile, de manière à ce que le plan conjugué du plan de positionnement courant déterminé de la partie de main soit confondu avec un plan capteur.

Avantageusement, le volume d'acquisition dans le compartiment utilisateur comprend une section d'entrée formée par une ouverture frontale et présente une profondeur permettant l'insertion de la partie de main depuis une extrémité des doigts, selon une direction dite longitudinale, ledit volume d'acquisition étant de hauteur variable selon une direction transversale avec un rétrécissement central.

De manière avantageuse, ladite section d'entrée forme un lobe s'étendant de chaque côté du rétrécissement central, notamment de manière symétrique, lesdits lobes ayant notamment un angle d'ouverture de 40° à 90°.

Avantageusement, la hauteur de l'ouverture frontale au niveau du rétrécissement central mesure 30 mm à 60 mm.

De manière avantageuse, le moyen d'éclairage de la surface à représenter comporte une pluralité de sources lumineuses.

Avantageusement, le dispositif d'acquisition tridimensionnelle d'informations tridimensionnelles du volume d'acquisition comporte une caméra tridimensionnelle temps de vol, ou un système de caméras stéréovision, ou une caméra tridimensionnelle à lumière structurée.

De manière avantageuse, au moins une source lumineuse est disposée à côté du dispositif d'imagerie bidimensionnelle, au moyen de laquelle la surface à représenter peut-être au moins partiellement éclairée.

Avantageusement, le moyen d'éclairage comprend plusieurs sources lumineuses placées annulairement autour du dispositif d'imagerie bidimensionnelle.

Selon un aspect de l'invention, les sources lumineuses de la pluralité de sources lumineuses sont disposées à égale distance du dispositif de prise de vue.

De manière avantageuse, le moyen d'éclairage comporte une diode bleue ou verte.

Avantageusement, le moyen d'éclairage émet en proche infra-rouge ou en proche ultraviolet.

De manière avantageuse, le système de capture comprend au moins un polariseur disposé devant le dispositif d'imagerie bidimensionnel ou le moyen d'éclairage.

Selon un aspect de l'invention, le système de capture comprend un dispositif de traitement de l'information apte à corriger des distorsions dans une image bidimensionnelle acquise par le dispositif d'acquisition bidimensionnel.

D'autres caractéristiques avantageuses de l'invention apparaîtront à la lecture de la description et des dessins.
La figure 1a représente un système de capture d'empreinte biométrique sans contact selon un premier exemple de réalisation.
La figure 1b représente le système de capture sans contact d'empreinte biométrique de la figure 1a, en cours d'utilisation par un utilisateur.
La figure 2 représente, selon un schéma de principe, une architecture du système de capture selon un mode de réalisation de l'invention.
La figure 3 est un bloc-diagramme schématique d'un dispositif de traitement de l'information pour la mise en oeuvre d'un ou plusieurs modes de réalisation de l'invention.
La figure 4 illustre le procédé de capture dans un mode de réalisation de l'invention.
La figure 5a illustre une vue en coupe du système de capture sans contact d'empreinte biométrique de la figure 4 en utilisation lors d'une première acquisition.
La figure 5b illustre une vue en coupe du système de capture sans contact d'empreinte biométrique de la figure 4 en utilisation lors d'une deuxième acquisition.
La figure 5c illustre une vue en coupe du système de capture sans contact d'empreinte biométrique de la figure 4 en utilisation lors d'une troisième acquisition.

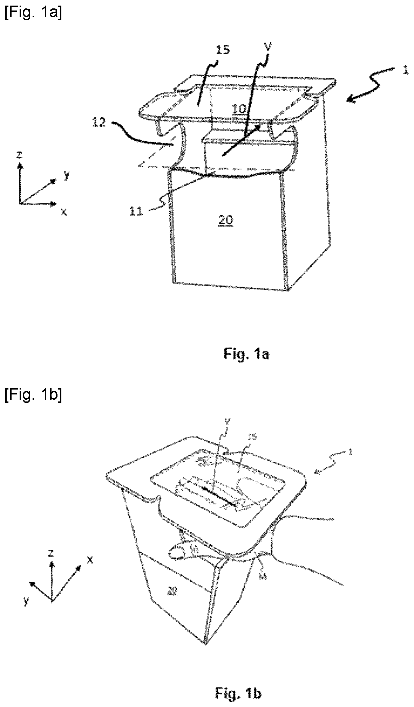

Les figures 1a et 1b illustrent un système de capture sans contact d'empreinte biométrique 1 apte à faire une acquisition d'une image d'une empreinte d'une partie d'une main d'un utilisateur, par exemple la paume d'une main, d'un ou de plusieurs doigts d'une main ou plusieurs mains (un pouce de chaque main par exemple), ou de la main entière.

Le système de capture d'empreinte biométrique 1 comprend un volume d'acquisition 10 et un compartiment électronique 20 dont le référentiel x, y, z est représenté.

Selon un exemple de réalisation illustré sur les figures 1a et 1b, le volume d'acquisition 10 est délimitée par les parois du compartiment utilisateur.

Le système de capture d'empreinte biométrique 1 peut comprendre un seul bloc sensiblement parallélépipédique, appelé aussi borne, comportant des parois communes au compartiment utilisateur et au compartiment électronique 20 ou bien être un assemblage d'un bloc physique de compartiment utilisateur et d'un bloc physique de compartiment électronique différent.

Le compartiment utilisateur et le compartiment électronique 20 peuvent être cloisonnés l'un par rapport à l'autre, par exemple par une vitre de séparation. La vitre de séparation est préférentiellement localisée dans le compartiment électronique 20, notamment en surface supérieure de ce dernier. La vitre de séparation peut être avantageusement orientée pour limiter des reflets ou faciliter son nettoyage. La vitre de séparation présente avantageusement des fonctions optiques, telles que polarisation ou filtrage en longueur d'onde.

Le compartiment utilisateur et le compartiment électronique 20 sont préférentiellement séparés par une cloison physique l'un sur l'autre tel que représenté en figure 1a, de manière à utiliser l'architecture pour guider le positionnement de la main de l'utilisateur.

Le compartiment utilisateur comprend au moins une ouverture pour le passage de la partie de main dont l'empreinte biométrique doit être imagée.

Par exemple, comme représenté ici, les côtés latéraux du compartiment utilisateur sont préférentiellement échancrés, c'est-à-dire dont le bord est creusé, formant deux ouvertures latérales 11, pour permettre le positionnement ergonomique d'un pouce (notamment de chaque main) de chaque côté interne du compartiment ou pour positionner un pouce de la main à l'extérieur du compartiment et les autres doigts la main à l'intérieur du compartiment, ce qui permet de bloquer l'avancée de la main (comme représenté sur la figure 1b), mais aussi de constituer un potentiel appui du pouce pour limiter les tremblements de la main sans nuire à la mobilité en rotation des doigts.

Le compartiment utilisateur délimitant le volume d'acquisition 10 comprend une ouverture frontale 11 et présente une profondeur permettant l'insertion de la main de l'utilisateur depuis une extrémité des doigts, et notamment jusqu'à la paume, selon une direction dite longitudinale. Sur les figures 1a et 1b il est de forme sensiblement parallélépipédique.

La hauteur (en z) du volume d'acquisition est ici constante aussi bien selon la direction transversale (en x) que longitudinale (en y), notamment de 40 mm à 100 mm pour permettre le passage des quatre doigts écartés dans différentes orientations. La largeur du volume d'acquisition est préférentiellement de 100 mm à 150 mm, par exemple 140 mm, de même pour sa profondeur, par exemple 125 mm, de manière à pouvoir imager plusieurs doigts, et notamment une paume ou encore la partie latérale de la paume du côté opposé au pouce, appelée aussi paume de l'écrivain, avec une surface d'acquisition minimale de 10 000 mm².

Sur la figure 1a le volume d'acquisition a un plan médian 12 sensiblement horizontal non incliné. Cet exemple n'est pas limitatif, selon les choix d'ergonomie, ce plan peut être incliné, ainsi suivant la hauteur d'installation du système de capture sans contact d'empreinte biométrique, si le volume d'acquisition est positionné plus bas que le coude, son plan médian est avantageusement incliné vers le bas dans le sens de la profondeur par rapport à la direction longitudinale ; .et a contrario si le volume d'acquisition est positionné plus haut que le coude, son plan médian est avantageusement incliné vers le haut.

Par exemple, le compartiment utilisateur 20 comprend une ouverture frontale 11 permettant le passage d'une main depuis l'extrémité des doigts et notamment jusqu'au début du poignet de l'utilisateur, selon une direction dite longitudinale.

Le système de capture 1 de l'invention peut être utilisé pour une acquisition de partie de main comprenant un ou plusieurs doigts D, par exemple une acquisition d'un doigt D, de plusieurs doigts D (d'une ou plusieurs mains), ou de paume de main.

Le volume d'acquisition 10 est adapté pour recevoir ladite partie de main M de l'utilisateur de sorte que la direction d'insertion de ladite partie de main M de l'utilisateur correspond à la direction du vecteur d'orientation V, les doigts de la partie de main M pointant dans le sens dudit vecteur d'orientation V tel que par exemple illustré sur la figure 1b.

La figure 1b illustre le système de capture sans contact 1 de la figure 1a, en cours d'utilisation par un utilisateur. La partie de main M de l'utilisateur est positionnée dans le volume d'acquisition 10 en vue d'une acquisition biométrique d'une partie de main comprenant ici les doigts index, majeur, annulaire et auriculaire. Le volume d'acquisition 10 reçoit la partie de main M de l'utilisateur dans un plan courant de positionnement correspondant au plan moyen de la main. À titre d'exemple, sur la figure 1b le plan courant de positionnement de la partie de main M et le plan médian 12 du volume d'acquisition 10 sont coplanaires.

Avantageusement, ledit compartiment utilisateur comporte sur une face extérieure 15 une portion transparente, préférentiellement vitrée, pour permettre à l'utilisateur de visualiser et mieux positionner sa partie de main, dont l'empreinte biométrique doit être imagée, dans un plan de positionnement.

La partie de main M dont l'empreinte biométrique doit être imagée doit être tournée vers le compartiment électronique 20.

Le compartiment électronique 20 comprend :
- un moyen d'éclairage du volume d'acquisition 10 ; apte à générer au moins un faisceau lumineux en direction du volume d'acquisition 10 de manière à éclairer la partie de main de l'utilisateur située dans le volume d'acquisition ;
   - un dispositif d'acquisition tridimensionnelle 50 d'informations tridimensionnelles du volume d'acquisition 10 ;
   - un dispositif d'imagerie bidimensionnel 40 d'axe d'imagerie fixe (dans le repère du compartiment électronique 20), ici vertical, comprenant au moins deux éléments optiques dont un capteur et un objectif, et dont la disposition définit un plan objet et un plan d'image. Au moins un des deux éléments optiques est orientable en rotation selon un mouvement de roulis autour d'un axe de rotation, de manière à faire varier le plan objet, par exemple par rotation du plan image si le capteur 401 est l'élément mobile, ledit dispositif d'imagerie étant apte à acquérir successivement au moins deux images de la partie de main M entre lesquelles le plan courant de positionnement déterminé de positionnement de la partie de main a varié ; par modification entre lesdites acquisitions successives desdites au moins deux images de l'orientation du plan objet par rotation autour d'un axe pivot ; lesdites au moins deux images comportant des points imagés de la partie de main communs auxdites au moins deux acquisitions ; ledit plan objet étant modifié en fonction d'une modification d'un plan courant déterminé de positionnement de la partie de main M; L'axe pivot est notamment perpendiculaire à l'axe d'imagerie fixe et parallèle au vecteur V d'orientation de la main appartenant au plan moyen du volume d'acquisition 10.

Le système de capture 1 comprend également, soit dans un dispositif de traitement de l'information au sein du compartiment électronique 20, soit sur un serveur distant, relié au dispositif de traitement de l'information du compartiment électronique 20 :
- un module de détermination du plan de positionnement de la partie de main, correspondant au plan courant moyen dans lequel se situe ladite partie de main M;
- un module de modification du plan objet par rotation autour de l'axe pivot Ap en fonction d'une modification du plan courant déterminé de positionnement de la partie de main M pour chaque acquisition d'image bidimensionnelle, notamment sous forme d'un sous module de calcul et d'un sous module de contrôle pilotant l'actuateur de mobilité en rotation (par exemple un moteur) autour de l'axe de rotation Ap' ;
- un module de fusion des images bidimensionnelles acquises d'une surface à représenter de ladite partie de main.
Par fusion il est à comprendre la production d'une image unique à partir de multiples images, y compris par sélection. Préférentiellement, sont obtenues autant d'images fusionnées que de surfaces à représenter de partie de main, par exemple pour plusieurs doigts il y aurait autant d'images fusionnées que de doigts-surface à imager, néanmoins une image unique tridimensionnelle représentant l'intégralité des surfaces à imager peut également être fournie par la fusion.

Avantageusement, l'axe pivot Ap est orienté selon une direction longitudinale du volume d'acquisition 10 et passe par un point central du volume d'acquisition 10.

Préférentiellement, le système de capture 1 sans contact d'empreinte biométrique comporte :
- un dispositif d'acquisition tridimensionnelle d'informations tridimensionnelles du volume d'acquisition ;
- un module de de détermination d'information tridimensionnelle de localisation de ladite partie de main dans au moins une image bidimensionnelle acquise
- un module d'association entre l'information tridimensionnelle de localisation déterminée et ladite image bidimensionnelle acquise;
- un module de reconstitution d'une image déroulée de la surface à représenter de la partie de main par utilisation de l'information tridimensionnelle déterminée associée à l'image bidimensionnelle acquise.

Sont obtenues ainsi autant de déroulés que de surfaces à représenter de partie de main, par exemple pour plusieurs doigts il y aurait autant de déroulés que de doigts-surface à imager.

Par exemple, la surface à représenter s'étend, dans le cas des doigts, d'un premier bord d'ongle à un deuxième bord d'ongle via la pulpe de chaque doigt ou respectivement, dans le cas d'une paume, d'un premier bord de la paume à un deuxième bord de la paume via la face palmaire de la main, et ladite empreinte biométrique étant respectivement digitale ou palmaire.

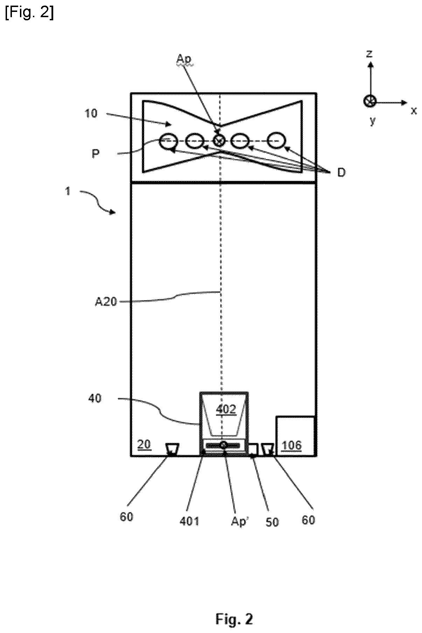

La Figure 2 illustre l'architecture du système de capture 1 selon un mode de réalisation de l'invention. Cette figure illustre le volume d'acquisition 10 équipé d'un dispositif d'imagerie bidimensionnel 40. Ce dispositif d'imagerie bidimensionnel 40 permet d'acquérir des images de la surface à représenter des doigts D de la main M.

L'ouverture frontale du compartiment utilisateur délimitant l'aire d'entrée du volume d'acquisition 10 présente comme précédemment une largeur et profondeur préférentielles de 100 mm à 150 mm, en revanche dans cette figure 2 la hauteur est variable selon une direction transversale, notamment de 100 mm à 110 mm aux extrémités avec un rétrécissement central de 30 mm à 60 mm. Cette architecture forme une section d'entrée en forme de papillon avec un lobe s'étendant de chaque côté du rétrécissement central, cette forme permettant intuitivement d'assister l'utilisateur en imposant des limites de mouvement des mains et en définissant clairement de facto l'axe pivot Ap autour duquel la main tourne, restreignant notamment les amplitudes de mouvement de la main de l'utilisateur. Préférentiellement l'angle d'ouverture de chaque lobe (dans le plan vertical ici) est de 40° à 90° Avantageusement, le contour formant l'aire verticale d'entrée est symétrique selon l'axe longitudinal, et l'axe transversal, avec un point central au croisement de ces deux axes. Avantageusement, la hauteur est variable selon la profondeur de manière à permettre à respecter la conformation de la main qui va s'épaississant du bout de doigt au poignet et permettre la mobilité de la partie de main M par rotation en roulis autour de l'axe pivot Ap, le volume d'acquisition présente alors un volume de passage à section variable, décroissance dans le sens de la profondeur, en forme de papillon.

Le dispositif d'imagerie bidimensionnel 40 est optiquement configuré de manière à permettre la capture de la main dans le volume d'acquisition 10 et comporte au moins deux éléments optiques dont un capteur 401 et un objectif 402. Préférentiellement, le dispositif d'imagerie bidimensionnel 40 comprend un capteur 401 unique et un objectif 402 unique, puisque de par la mobilité de l'au moins un élément optique, il n'est pas nécessaire d'avoir de multiples capteurs ou objectifs pour imager la ou les surfaces à représenter de la partie de main, ce qui assure au système 1 un gain en termes de compacité. Le capteur 401 comprend la surface photosensible du dispositif d'imagerie bidimensionnel 40. L'axe d'imagerie fixe A20 du dispositif d'imagerie bidimensionnel 40 est fixe dans le repère du compartiment électronique 20 et passe par des points fixes de référence du capteur 401 et de l'objectif 402, notamment par le centre de la surface sensible du capteur 401 et le centre de l'objectif 402 dans le cas d'une approximation en lentille mince. Dans la figure cet axe d'imagerie A20 est vertical, cet exemple n'étant pas limitatif, l'axe d'imagerie A20 pouvant être incliné.

Pour modifier le plan objet, c'est à dire le plan de focalisation, un élément de la chaine d'imagerie, ici capteur est donc inclinable par mise en rotation autour de son axe de rotation Ap'. Dans le cas ici décrit, mais non limitatif, du capteur 401 mobile et de l'objectif 402 fixe, l'axe d'imagerie A20 fixe reste toujours confondu avec l'axe optique de l'objectif, et pour obtenir une image nette, il faut que le capteur 401 soit dans un plan conjugué (par l'objectif 402) du plan de positionnement P courant déterminé de la partie de main. Et si la main est inclinée par rapport à l'axe d'imagerie, ces deux plans sont donc inclinés l'un par rapport à l'autre. De manière générale, un des deux éléments optiques 401.402 (selon le principe d'équivalence) est mobile en rotation de manière à pouvoir balayer une plage angulaire en inclinant l'élément optique mobile par rapport à l'axe d'imagerie A20 fixe et se positionner dans un plan conjugué du plan de positionnement P courant déterminé de la partie de main. Par construction, l'axe pivot Ap appartient ici au plan horizontal de symétrie du volume d'acquisition 10 et l'axe de rotation Ap' du plan image est parallèle à l'axe pivot Ap.

Pour assurer la mobilité en rotation, l'élément optique mobile est piloté par un actuateur, il est notamment motorisé (moteur non représenté), permettant son orientation dans l'espace. Dans l'exemple de réalisation, il est doté d'un moteur permettant une rotation dans le plan vertical. Avantageusement, le moteur est du type sans balais *(brushiess* en anglais), notamment en prise directe, qui permettent un mouvement continu du moteur. Ce type de moteurs sans balais permet un suivi fluide et en continu par l'élément mobile des changements de plan de positionnement P de la main sans nuire aux prises de vue, ce qui est particulièrement intéressant dans le mode de réalisation par pilotage direct du moteur en fonction du plan de positionnement de la main déterminé en temps réel par analyse des informations tridimensionnelles acquises en continu pendant le mouvement. Lorsque le moteur est en prise directe, l'absence de réducteur propre à ces moteurs élimine les jeux de fonctionnement afférents. Cela ne serait pas possible avec un moteur pas à pas piloté selon une méthode de pilotage pas à pas, qui demeure néanmoins d'intérêt pour le mode de réalisation par guidage par étape de la main de l'utilisateur. En variante, on peut aussi utiliser avantageusement un actuateur magnétique (*voice coil* en anglais), un moteur galvanométrique, ou encore un moteur piézoélectrique si le déplacement n'est pas trop faible, ces solutions sont plus légères à mettre en oeuvre et plus rapides que des moteurs rotatifs et permettent un mouvement continu.

La distance de mise au point, à savoir ici la distance entre l'objectif 402 et la main suivant l'axe d'imagerie A20 fixe, est prédéterminée dans le mode de réalisation avec la section de passage amincie. Par conséquent la distance entre le centre du capteur 401 et l'objectif 402 suivant l'axe d'imagerie ne varie pas non plus. En variante, ces distances pourraient être variables aussi, sans remettre en cause l'invention.

Le moyen d'éclairage 60 sert à éclairer la ou les surfaces à représenter et comporte par exemple une seule source lumineuse ou une pluralité de sources lumineuses. Une source lumineuse peut être une source lumineuse étendue ou ponctuelle. Une source lumineuse 60 peut avoir un angle de diffusion large ou concentré. La source lumineuse peut avoir un axe moyen de diffusion approximativement colinéaire avec la direction d'imagerie A20 ou en alternative être inclinée par rapport à la direction d'imagerie A20. Les sources lumineuses 60 représentées ici sont plurielles et disposées à côté du dispositif d'imagerie bidimensionnelle 40, de manière à éclairer la ou les surfaces à représenter. Avantageusement, le moyen d'éclairage 60 comprend plusieurs sources lumineuses placées annulairement autour du dispositif d'imagerie bidimensionnelle 40, c'est-à-dire à dire disposées à égale distance du dispositif d'imagerie bidimensionnelle 40, de manière à éclairer uniformément la ou les surfaces à représenter. Le moyen d'éclairage 60 comporte avantageusement une diode électro luminescente (ou super luminescente) rouge, bleue ou verte, car les diodes créent moins de tavelures que les lasers. Le moyen d'éclairage 60 émet dans le visible (préférentiellement avec une longueur d'onde inférieure à 600nm), en proche infra-rouge ou en proche ultraviolet selon le contexte et la qualité d'image recherchée. La paroi supérieure, préférentiellement vitrée, du compartiment utilisateur, appelée aussi casquette, peut être réduite lorsque les fuites de lumière ne sont ni éblouissantes ni dangereuses.

Le système de capture 1 comprend avantageusement un polariseur (non représenté) disposé devant le dispositif d'imagerie bidimensionnel 40 ou devant le moyen d'éclairage 60 puisqu'en utilisant un éclairage polarisé et un dispositif d'imagerie dans la même polarisation, on privilégie l'image de la surface, la lumière pénétrant dans le doigt étant dépolarisée par les diffusions successives, et dans le cas de l'empreinte, cela est favorable au contraste entre les crêtes et les sillons. En pratique, on place un ou des polariseurs linéaires (ou circulaires) tous parallèles entre eux devant le dispositif d'imagerie bidimensionnel 40 et la ou les sources d'éclairage 60, alternativement, un unique polariseur linéaire de grande dimension peut couvrir l'ensemble. Puis on place un polariseur orthogonal sur la partie vitrée 15 de la paroi supérieure pour prévenir les fuites de lumière et protéger l'utilisateur de l'éblouissement.

Le dispositif d'acquisition tridimensionnel 50, peut être indépendant et comporter par exemple une caméra tridimensionnelle temps de vol, ou un système de caméras stéréovision ou une caméra tridimensionnelle à lumière structurée, ou peut être intégré en partie au dispositif d'imagerie bidimensionnel 40, par exemple si une des caméras d'un système de stéréovision est le dispositif d'imagerie bidimensionnel 40 ou si le capteur 401 du dispositif d'imagerie bidimensionnel 40 est également apte à acquérir de la lumière structurée, le projecteur de lumière structuré étant préférentiellement en dehors du dispositif d'imagerie bidimensionnel 40. Ce dispositif d'acquisition tridimensionnelle 50 d'informations tridimensionnelles du volume d'acquisition est préférentiellement disposé à proximité du dispositif d'imagerie bidimensionnel 40. Les informations tridimensionnelles acquises par le dispositif d'acquisition tridimensionnel 50 servent avantageusement au dispositif de traitement pour générer l'image déroulée de la surface à représenter de la partie de main. Préférentiellement, il est optimal que le dispositif d'acquisition tridimensionnelle 50 capture au moins toute la zone imagée par dispositif d'imagerie bidimensionnel 40 qui sera conservée dans l'image finale. (i.e. la partie de main acquise, soit les empreintes : zones des dermatoglyphes sur les doigts et/ou les paumes).

Le système de capture 1 est contrôlé par un dispositif de traitement de l'information 106 qui permet notamment de commander les mouvements du moteur de l'élément optique mobile. Préférentiellement, mais pas obligatoirement, c'est également ce dispositif de traitement de l'information 106 qui reçoit et traite les images reçues du dispositif d'imagerie bidimensionnel 40 ainsi que les acquisitions du dispositif d'acquisition tridimensionnel 50 quand il est présent. Le dispositif de traitement de l'information 106 comprend typiquement au moins un calculateur, un ordinateur, une tablette ou tout autre dispositif permettant l'exécution d'un programme informatique en charge du contrôle de l'élément optique mobile, de l'acquisition des images et des différentes étapes du procédé selon l'invention. Le dispositif de traitement de l'information 106 comporte le module de détermination du plan courant de positionnement P de la partie de main, dans lequel s'étire la main, ainsi que le module d'association entre les images bidimensionnelles et les informations tridimensionnelles ; et le module de fusion des images bidimensionnelles acquises d'une surface à représenter de ladite partie de main. Avantageusement, si un dispositif 50 d'acquisition tridimensionnelle d'informations tridimensionnelles du volume d'acquisition est présent, le dispositif de traitement de l'information 106 comporte alors également :
- un module de de détermination d'information tridimensionnelle de localisation de ladite partie de main dans au moins une image bidimensionnelle acquise
- un module d'association entre l'information tridimensionnelle de localisation déterminée et ladite image bidimensionnelle acquise;
- un module de reconstitution d'une image déroulée de la surface à représenter de la partie de main par utilisation de l'information tridimensionnelle déterminée associée à l'image bidimensionnelle acquise., ces modules pouvant être hébergés localement dans le compartiment électronique ou sur un serveur accessible à distance.

Ce système de capture 1, par son agencement, et notamment de par son élément optique mobile, est compact tout en permettant, l'acquisition d'images bidimensionnelles et d'informations tridimensionnelles suffisantes pour reconstituer d'une image déroulée de la surface à représenter de la partie de main.

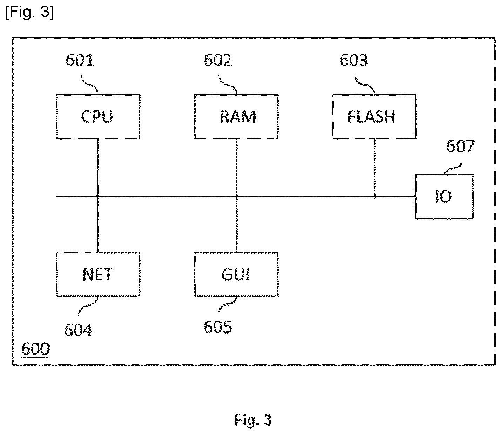

La figure 3 est un bloc-diagramme schématique d'un dispositif de traitement de l'information 600 pour la mise en oeuvre d'un ou plusieurs modes de réalisation de l'invention. Ce dispositif correspond typiquement au dispositif 106 de la figure 2. Le dispositif 600 de traitement de l'information peut être un périphérique tel qu'un nano-ordinateur, un poste de travail ou un terminal mobile de télécommunication. Le dispositif 600 comporte un bus de communication connecté à :
- une unité centrale de traitement 601, tel qu'un microprocesseur, notée CPU ;
- une mémoire transitoire 602, notée RAM, pour mémoriser le code exécutable du procédé de réalisation de l'invention ainsi que les registres adaptés à enregistrer des variables et des paramètres nécessaires pour la mise en oeuvre du procédé selon des modes de réalisation de l'invention ; la capacité de mémoire du dispositif peut être complétée par une mémoire RAM optionnelle connectée à un port d'extension, par exemple ;
- une mémoire non transitoire 603, notée FLASH, pour stocker les programmes informatiques et données de calibration pour la mise en oeuvre des modes de réalisation de l'invention ;
- une interface réseau 604, notée NET, est normalement connectée à un réseau de communication sur lequel des données numériques à traiter sont transmis ou reçus. L'interface réseau 604 peut être une seule interface réseau, ou composée d'un ensemble d'interfaces réseau différentes (par exemple filaire et sans fil, interfaces ou différents types d'interfaces filaires ou sans fil). Des paquets de données sont envoyés sur l'interface réseau pour la transmission ou sont lues à partir de l'interface de réseau pour la réception sous le contrôle de l'application logiciel exécuté dans le processeur 601 ;
- une interface utilisateur 605 pour recevoir des entrées d'un utilisateur ou pour afficher des informations à un utilisateur ;
- un module d'entrée/sortie 607 pour la réception / l'envoi de données depuis / vers des périphériques externes tels que disque dur, support de stockage amovible ou autres.

Le code exécutable peut être stocké dans une mémoire non volatile 603, par exemple une mémoire flash ou une mémoire morte, sur le dispositif de stockage 606 ou sur un support amovible numérique tel que par exemple un disque. Selon une variante, le code exécutable des programmes peut être reçu au moyen d'un réseau de communication, via l'interface réseau 604, afin d'être stocké dans l'un des moyens de stockage du dispositif de communication 600, tel que le dispositif de stockage 606, avant d'être exécuté.

L'unité centrale de traitement 601 est adaptée pour commander et diriger l'exécution des instructions ou des portions de code logiciel du programme ou des programmes selon l'un des modes de réalisation de l'invention, instructions qui sont stockées dans l'un des moyens de stockage précités. Après la mise sous tension, le CPU 601 est capable d'exécuter des instructions de la mémoire RAM transitoire 602, relatives à une application logicielle. Un tel logiciel, lorsqu'il est exécuté par le processeur 601, provoque l'exécution des procédés décrits.

Le dispositif de traitement de l'information 600 tel qu'illustré est local mais il peut aussi être distribué et comporter de multiples unités de traitement, notamment physiquement déportées (en dehors de la borne) communiquant entre elles via l'interface réseau, de même une partie de la mémoire peut être physiquement déportée, hébergée par exemple sur des serveurs. Par exemple, le module de détermination et/ou le module d'association et/ou le module de reconstitution peuvent ne pas être hébergés localement mais dans une entité de traitement physiquement déportée, de manière à mutualiser des capacités de calcul déjà existantes ou à rendre la borne encore plus compacte.

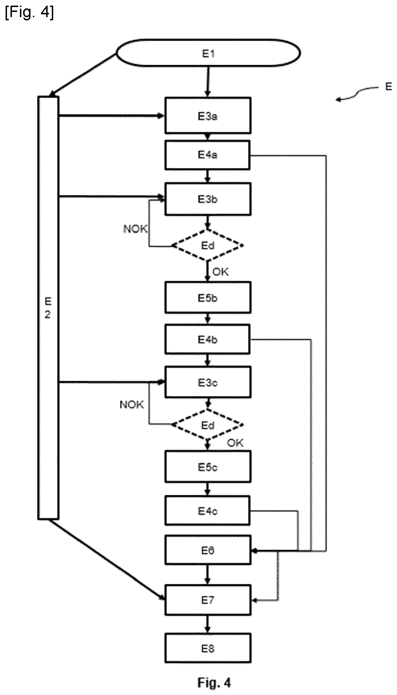

La figure 4 représente le procédé E de capture dans un mode de réalisation de l'invention. On décrit ici le procédé E en lien avec le système de capture 1 illustré dans les figures précédentes.

Le procédé E de capture sans contact d'empreinte biométrique d'une partie de main M d'un utilisateur dans un volume d'acquisition 10, comprend avantageusement les étapes suivantes :
- initialisation E1 du dispositif lors de sa mise en route,
- acquisition E2 d'informations tridimensionnelles du volume d'acquisition ;
- détermination E3a, E3b, E3c du plan de positionnement P courant de la partie de main, préférentiellement initiée par exemple préalablement aux acquisitions bidimensionnelles E4a, E4b, E4c de manière notamment à disposer des plans courants déterminés de positionnement P propres aux pas de temps des acquisitions bidimensionnelles E4a, E4b, E4c, sur la base des information tridimensionnelles acquises ;

- éclairage du volume d'acquisition 10 de manière à éclairer la partie de main de l'utilisateur, pour l'acquisition qualitative des images bidimensionnelles ;
- acquisitions E4a, E4b, E4c successives, au moyen du dispositif d'imagerie bidimensionnel 40, dont un élément optique (le capteur d'images 401 ou l' objectif 402 ) est mobile en rotation autour de l'axe de rotation Ap' perpendiculaire à l'axe d'imagerie A20 fixe, de trois images de la partie de main s'étirant dans un plan de positionnement , avec entre chaque acquisition successive:
- une étape de déduction Ed de modification du plan courant déterminé de positionnement P de la partie de main de manière à modifier le plan objet par rotation de l'élément optique autour de l'axe de rotation Ap' si le plan courant déterminé de positionnement P de la main a changé entre deux acquisitions Ed=OK , notamment par mouvement de roulis de la partie de main autour du vecteur d'orientation V de la main, par construction sensiblement parallèle à l'axe pivot Ap ;
lesdites au moins deux images bidimensionnelles comportant des points imagés de la partie de main communs auxdites au moins deux acquisitions ;
- étape de fusion E6 des images bidimensionnelles acquises d'une surface à représenter de ladite partie de main, comportant notamment une mise en correspondance de points communs entre lesdites au moins deux images bidimensionnelles, de manière à produire une image fusionnée par doigt D par exemple ;
- étape d'association E7 entre l'information tridimensionnelle de localisation déterminée correspondant à chaque acquisition bidimensionnelle et ladite image bidimensionnelle acquise correspondante
- étape E8 de reconstitution d'une image déroulée de la surface à représenter de la partie de main par utilisation de l'information tridimensionnelle déterminée associée à l'image bidimensionnelle acquise.

L'objectif est d'avoir plusieurs images bidimensionnelles d'un même doigt acquises avec la rotation du doigt par rapport à l'axe d'imagerie A20. Dit autrement, les acquisitions bidimensionnelles successives desdites au moins deux images dans au moins deux directions différentes forment au moins deux vues de la surface à représenter. L'utilisation des informations tridimensionnelles, facultative, optimisant surtout le réglage des acquisitions bidimensionnelles et améliorant les traitements d'images.

Concernant la mise en oeuvre du procédé de capture, on peut notamment citer deux modes de mise en oeuvre.

Selon un premier mode de mise en oeuvre, l'utilisateur est guidé au moyen d'instructions séquentielles émises par l'interface utilisateur 605 par notamment un guidage vocal et/ou un affichage, par exemple au moyen d'un écran (affichant par exemple des positions de main virtuelle) et/ou de diodes électroluminescentes LED implantées de part et d'autre de la zone d'acquisition sur les parois avant de l'ouverture frontale du compartiment utilisateur de manière à matérialiser le plan acquis ou le plan à acquérir par scintillement des LED situées dans le prolongement de ce plan. Avantageusement, dans ce mode de réalisation la couleur des LED sert à indiquer à l'utilisateur la correction de plan attendue pour aider ce dernier à positionner sa main dans le plan prédéterminé de positionnement P requis. En variante, l'utilisateur peut être guidé par un opérateur. L'utilisateur positionnera donc sa main dans un plan prédéterminé de positionnement P, en fonction des instructions de guidage, ces instructions de guidage lui indiquant par exemple initialement de positionner sa main à plat, puis d'incliner sa main de 15° dans le sens horaire par rapport au plan horizontal autour de l'axe pivot Ap orienté selon la direction longitudinale et passant par le point médian du rétrécissement de l'ouverture frontale.

Selon un second mode de mise en oeuvre, l'utilisateur est guidé au moyen d'une instruction générale émise, notamment en continu, par l'interface utilisateur 605 pendant l'utilisation du système 1 par l'utilisateur. Ce guidage est notamment réalisé au moyen de l'affichage d'un mouvement de roulis et éventuellement un guidage vocal. Avantageusement l'affichage peut comporter des éléments holographiques. L'utilisateur insérera donc sa main pour la faire évoluer selon le mouvement désigné dans le volume d'acquisition 10, le mouvement continu proposé (par exemple un mouvement de roulis de la main ou une volute) permettant d'incliner la main de manière à ce qu'elle prenne une multitude de poses différentes, permettant autant d'acquisitions dans des plans de positionnement variés. Pour ce faire, le pilotage du moteur de l'élément optique du dispositif de capture bidimensionnel 40 se fait en temps réel, notamment par un processeur temps réel du dispositif de traitement 600, sur la base des analyses des informations tridimensionnelles acquises elles-mêmes en continu. Le plan de positionnement courant déterminé sur la base des informations tridimensionnelles acquises, est utilisé par le module de contrôle pour imposer une orientation au capteur de la caméra de sorte que l'image, capturée par ce capteur, soit nette. Autrement dit, les points appartenant au plan objet et les points appartenant au plan image sont régis, dans le sens de l'optique géométrique, par la relation de conjugaison reliant la position d'un point objet situé dans le plan objet à celle de son image, formée par le dispositif d'imagerie bidimensionnelle dans le plan image.

Il convient de remarquer que pour ces modes de mise en oeuvre le volume d'acquisition 10 n'est pas nécessairement en forme de papillon, le compartiment utilisateur pouvant être parallélépipédique par exemple pour améliorer la fluidité du mouvement de la main.

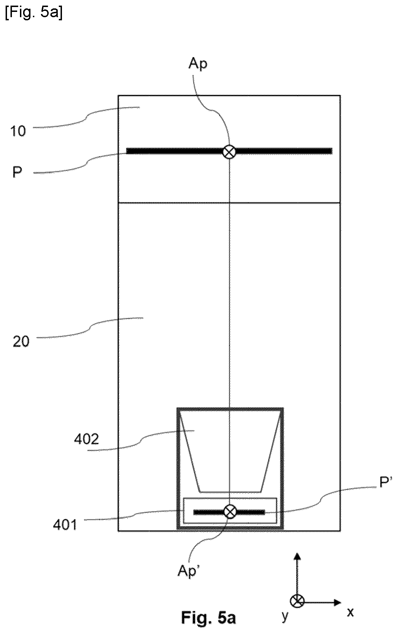

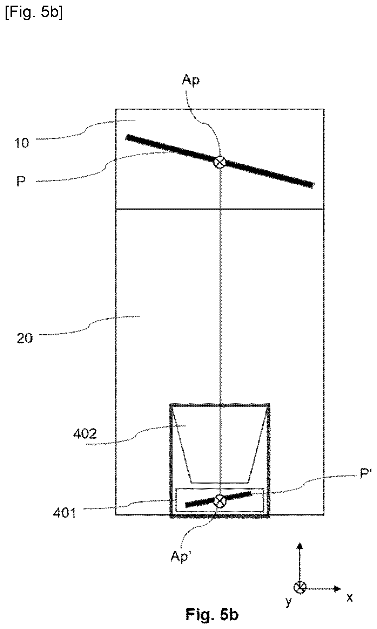

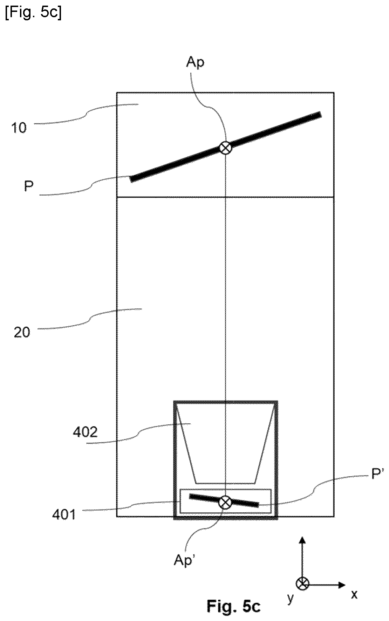

Les figures 5a, 5b et 5c illustrent trois étapes d'acquisition successives E4a E4b et E4c lors de la mise en oeuvre de ce procédé E selon le premier mode de réalisation (guidage séquentiel : à phases multiples) plus précisément décrit ci-après. Dans le mode de réalisation illustré par ces figures, le système de capture sans contact 1 d'empreinte biométrique, c'est-à-dire ici de données biométriques des quatre doigts D de main, a comme élément optique mobile en rotation autour de l'axe d'imagerie A20 le capteur d'images 401.

L'étape d'initialisation E1 du dispositif lors de sa mise en route, comporte un pilotage du moteur de l'élément mobile, ici le capteur 401, de manière à le positionner dans le plan horizontal, comme illustré dans la figure 5a. Un module de commande, ici hébergé dans le dispositif de traitement 106, donne donc instruction pour orienter le capteur 401 du dispositif de capture bidimensionnel 40 horizontalement pour enregistrer la première image.

Corrélativement, lors de cette étape d'initialisation E1 une première instruction est donc adressée à l'utilisateur l'invitant à insérer sa main M avec les doigts D écartés pour la positionner dans le plan médian horizontal du volume d'acquisition. En effet, une disposition de la main avec les quatre doigts de la main écartés permet de rendre les bords de chacun des doigts mieux visibles par le dispositif 40 d'imagerie.

L'étape d'initialisation E1 déclenche l'éclairage du volume d'acquisition 10 de manière à éclairer les doigts D que l'utilisateur insère et cet éclairage est préférentiellement maintenu jusqu'à la fin du procédé, comme représenté sur la figure 4. En variante, l'éclairage pourrait être déclenché par un détecteur de proximité de manière à ne pas éclairer en l'absence d'utilisateur . En variante, l'éclairage n'est dispensé que lors de l'acquisition des images bidimensionnelles, ce qui permet de limiter la consommation énergétique.

Avantageusement, l'étape d'initialisation E1 déclenche l'acquisition E2 d'informations tridimensionnelles du volume d'acquisition, cette acquisition pouvant être en continu comme représenté sur la figure 4 ou déclenchée après un délai (en anglais timeout) à la fin de l'émission de l'instruction de guidage, de manière à contrôler le positionnement correct de la main dans le plan attendu. Cette première acquisition en configuration horizontale permet d'enregistrer les informations des parties centrales des empreintes des quatre doigts D.

L'étape de détermination E3a du plan de positionnement P courant de la partie de main dans ce mode de réalisation peut être simple car l'orientation moyenne de la main est supposée connue : le plan de positionnement P courant de la main étant celui requis par le guidage, c'est-à-dire dans cet exemple : horizontal : 0 degrés.

De manière additionnelle, le plan de positionnement P courant de la main peut être calculé sur la base des informations tridimensionnelles acquises. En fonction de la fréquence d'acquisitionE2 d'informations tridimensionnelles, un traitement par analyse en temps réel des informations tridimensionnelles permet de calculer le plan de positionnement P courant sur la base de l'information tridimensionnelle acquise sur le pas de temps courant ou sur la base de la dernière image tridimensionnelle acquise à un instant t sensiblement égal à l'instant courant. Le dispositif d'acquisition tridimensionnelle 50 comporte par exemple deux caméras de contexte en mode stéréoscopique pour permettre la localisation en trois dimensions des doigts D détectés sur l'image dans l'espace en trois dimensions constituées par le volume d'acquisition 10, notamment par triangulation. Il est rappelé ici, que d'autres modes de réalisation peuvent utiliser d'autres techniques, alternatives ou en complément de la visualisation stéréoscopique, comme les caméras temps de vol, ou encore un système de vision en trois dimensions par lumière structurée. Par simplicité, on fait ici l'hypothèse que le plan de positionnement P de la partie de main M correspond au plan moyen dans lequel se trouve la partie de main de l'utilisateur, c'est à dire ici les quatre doigts. Avantageusement, le calcul du plan de positionnement P courant permet une vérification de correspondance entre le plan de positionnement P courant déterminé par calcul et le plan prédéterminé : supposé (requis par le guidage), avant d'exécuter les étapes suivantes, le résultat de la vérification pouvant être affiché à l'utilisateur au moyen d'un message dédié visant soit au maintien de la position correcte ou soit à la correction de la position incorrecte.

La figure 5a représente la première étape d'acquisition E4a d'image par le dispositif d'imagerie bidimensionnel.

Dans un deuxième temps, une deuxième instruction de guidage est donnée à l'utilisateur pour lui demander de positionner sa main (après l'avoir retirée ou non) dans le volume d'acquisition 10 avec une orientation moyenne par rapport à la position précédente, correspondant à un plan horizontal, entre de 20° et 50°, par exemple 45° dans le sens anti horaire, comme illustré sur la figure 5b. Pour atteindre cette deuxième position par rapport à la première position (à plat) le mouvement de la main correspond à une rotation de 45° autour du vecteur d'orientation V de la main (correspondant à l'axe longitudinal de la portion de la main), ledit vecteur d'orientation V de la main demeurant fixe, correspondant à un mouvement de roulis autour de l'axe pivot Ap qui est l'axe de rotation du plan objet, cet axe pivot Ap passant par construction (optique) par le centre de symétrie du volume d'acquisition, ici parallélépipédique (sur les figures 5a,b,c le volume d'acquisition étant représenté sous la forme d'un parallélépipède).

La deuxième étape de détermination E3b du (deuxième) plan de positionnement P courant de la partie de main est appliquée comme précédemment. Comme précédemment une vérification du positionnement correct peut être effectuée de manière à éviter de déclencher l'acquisition d'image bidimensionnelle tant que la partie de main n'est pas positionnée tel que demandé.

Sur la base de ce deuxième plan de positionnement P il en est déduit par comparaison du premier et du deuxième plan P une modification Ed=OK du plan de positionnement P courant de la partie de main conformément aux attentes (guidage). Il convient de noter qu'en variante la détection de modification du plan de positionnement P peut être acquittée automatiquement après un délai (en anglais timeout) à la fin de l'instruction de guidage.

Est alors commandée la modification E5b d'orientation du plan objet par rotation autour de l'axe pivot Ap obtenue ici par la modification du plan image, c'est-à-dire par la rotation du capteur 401 autour de l'axe de rotation Ap' du capteur. La consigne de pilotage du moteur permettant l'orientation du capteur est donc fonction du plan de positionnement P courant (le deuxième) déterminé (ici supposé connu mais ledit plan de positionnement pouvant également être calculé, ou encore estimé sur la base d'informations tridimensionnelles antérieures dans le cadre d'une estimation de trajectoire des doigts, notamment pour le second mode de guidage (continu)). Le module de contrôle utilise l'information d'orientation du plan de positionnement P courant (le deuxième) déterminé pour donner une instruction permettant d'orienter le capteur 401 selon une configuration d'angle donnée pour que la deuxième image bidimensionnelle acquise soit nette sur les quatre doigts de la main. Cette configuration est illustrée dans a figure 5b où est réalisée une orientation de - 4° du capteur 401 par rapport au plan horizontal, c'est-à-dire une rotation autour de l'axe de rotation Ap' du capteur 401 dans le sens horaire (opposé au sens de rotation du mouvement de la main). La valeur de l'angle d'orientation du capteur 401 est imposée par le module de commande et prédéterminée en fonction des paramètres de l'optique (principalement la focale de l'objectif 402 ou la distance entre le centre de symétrie du volume d'acquisition 10 et le centre du capteur 401) et du grandissement optique du dispositif d'imagerie bidimensionnel. Cette configuration permet ici d'enregistrer les informations empreintes des côtés gauches des doigts. Dans l'exemple de réalisation illustrée sur les figures 5a, 5b et 5c, une optique (objectif) de focale 25mm et un grandissement de 0.07, permet d'imager une surface d'environ 70 cm par 70 cm, ce qui est suffisant, en moyenne, pour imager une main entière. Avantageusement, pour chaque plan de positionnement P la valeur de l'angle d'orientation du capteur 401, ou les valeurs des paramètres de pilotage du moteur à appliquer est définie préalablement dans une table, notamment stockée comme calibration de configuration dans la mémoire non transitoire 603. Ces angles d'orientation du capteur 401 sont notamment prédéfinis optiquement et selon le mode de guidage (séquentiel ou continu) de manière à ce que les images bidimensionnelles acquises comportent en commun (notamment deux à deux) des points imagés de la partie de main, tout en permettant de couvrir toute la surface à imager des doigts avec les plans de positionnements attendus. Ce recouvrement partiel de la surface à représenter sert ensuite lors de l'étape de fusion E6 des images bidimensionnelles acquises de la surface à représenter de ladite partie de main, permettant ici l'obtention d'une image fusionnée pour chacun des quatre doigts.

La figure 5b représente la deuxième étape consécutive d'acquisition E4b d'image par le dispositif d'imagerie bidimensionnel 40.

Dans un troisième temps, une troisième instruction de guidage est donnée à l'utilisateur pour lui demander de positionner sa main dans le volume d'acquisition 10 avec une orientation moyenne opposée à la précédente, soit 45° dans le sens horaire par rapport à la position initiale, comme illustré sur la figure 5c. Pour atteindre cette troisième position par rapport à la deuxième position (à 45°) le mouvement de la main correspond à une rotation dans le sens opposé du précédent de 90° autour du vecteur d'orientation V de la main, correspondant à un mouvement de roulis autour de l'axe pivot Ap.

La troisième étape de détermination E3c du (troisième) plan de positionnement P courant de la partie de main est appliquée comme précédemment.

Sur la base de ce troisième plan de positionnement P il en est déduit Ed=OK une modification du plan de positionnement P courant de la partie de main conformément aux attentes (guidage).

Est alors commandée la modification d'orientation du plan objet par rotation autour de l'axe pivot Ap obtenue ici par la modification du plan image, c'est-à-dire par la rotation du capteur 401 autour de l'axe de rotation Ap' du capteur. Le capteur 401 est orienté de 4° dans le sens opposé. Cette configuration est illustrée dans la figure 5c dans laquelle l'orientation du capteur 401 par rapport au plan horizontal est de + 4°., c'est-à-dire une rotation autour de l'axe de rotation Ap' de 8° dans le sens opposé à précédemment Cette configuration permet ici d'enregistrer les informations empreintes des côtés droit des doigts.

La figure 5c représente la troisième étape consécutive d'acquisition E4c d'image par le dispositif d'imagerie bidimensionnel 40.

Lors des acquisitions successives E4a, E4b, E4c (dont l'ordre aurait pu être différent) les différents plans courants de positionnement P déterminés décrivent une plage de balayage angulaire en roulis d'au moins 15°, ici même 90°, l'axe pivot Ap étant parallèle au vecteur d'orientation V de la main. C'est-à-dire que parmi les images bidimensionnelles acquises au moins deux présentent des plans courants de positionnement P inclinés entre eux d'au moins 15°.

Les trois images (non limitativement), acquises successivement, des quatre doigts, avec différentes orientations du plan moyen de la main, sont enregistrées dans la mémoire transitoire 602 et envoyées séquentiellement vers l'unité centrale 601 du dispositif de traitement 600.

Les modifications de l'orientation du capteur 401 permettent d'orienter le plan image dans un plan conjugué du plan courant déterminé de positionnement P faisant ainsi coïncider plan objet et plan courant déterminé de positionnement P.

Les informations tridimensionnelles acquises sont également envoyées vers l'unité centrale 601 du dispositif de traitement 600.

L'étape de fusion E6 des images bidimensionnelles acquises et l'étape d'association E7 des images bidimensionnelles acquises avec les informations tridimensionnelles sont effectuées par l'unité centrale 601. Cette étape d'association E7 peut être synchrone à la réception des images bidimensionnelles et informations tridimensionnelles ou ultérieure, et peut consister en un appariement deux par deux d'image et information tridimensionnelle acquises formant des couples d'image bidimensionnelle acquise et information tridimensionnelle acquise au même instant ou sensiblement au même instant, ou l'association peut consister en une association d'une image acquise bidimensionnelle avec une représentation tridimensionnelle estimée sur la base par exemple d'un suivi de mouvement (tracking en anglais) issu de l'analyse des informations tridimensionnelles acquises.

L'étape de reconstitution E8 d'une image déroulée de la surface à représenter de la partie de main par utilisation de l'information tridimensionnelle déterminée associée à l'image bidimensionnelle acquise est réalisée, ici par l'unité centrale 601, par traitement des images précédemment associées, et grâce au principe de recouvrement de certains points de la surface à représenter dans les images bidimensionnelles, les couples d'images peuvent être positionnés entre eux de manière à reconstituer tridimensionnellement la surface à représenter.

Le déroulé du procédé est le même avec le second mode de guidage, l'utilisateur décrivant avec sa main un mouvement continu lent, pendant lequel seront effectuées les acquisitions d'informations tridimensionnelles E2 qui permettront en temps réel de déterminer E3a le plan de positionnement P courant de la main, par analyse en temps réel des informations tridimensionnelles acquises, et de piloter de manière synchrone l'orientation de l'élément optique mobile autour de l'axe de rotation Ap' en fonction du plan de positionnement P courant déterminé. Dans ce cas le pilotage de l'organe mobile en rotation est donc commandé en automatique, préférentiellement par une boucle d'asservissement ou un balayage d'orientation prédéterminé.

En cours de mouvement de la main de l'utilisateur, on a donc ici: :
- une première acquisition E4a d'une première image d'une partie de la surface à représenter de la main, la main s'étirant dans un premier plan de positionnement P par rapport à un référentiel du volume d'acquisition et le plan objet étant orienté selon un premier plan ;
- une seconde acquisition E4b d'une seconde image d'une partie de la surface à représenter de la main, la main s'étirant dans un second plan de positionnement P par rapport à un référentiel du volume d'acquisition, ledit second plan de positionnement P étant différent du premier, et le plan objet étant orienté selon un second plan, différent du premier, au moins une partie des points de la surface à représenter acquise entre les deux images bidimensionnelles étant commune aux deux acquisitions consécutives puisque le déplacement de la main est moindre entre les deux images, le mouvement de la main étant limité(ce qui ne sera en revanche pas nécessairement vrai entre les images extrêmes : première et dernière images bidimensionnelles acquises car cela dépend du mouvement de la main).

En variante, le contrôle peut aussi être sous forme de balayage prédéterminé de l'élément optique mobile avec une sélection a posteriori des images bidimensionnelles pour lesquelles la main était dans le plan requis.

Les mêmes modes de fonctionnement s'appliquent dans le cas où l'objectif 402 est mobile, les deux cas étant équivalents, il convient juste de rappeler que dans ce cas le plan image n'est pas modifié. Quand l'élément optique mobile est l'objectif 402, il y a une équivalence optique au mode dans lequel l'élément optique mobile est le capteur, l'axe de rotation Ap' passant par le centre optique de l'objectif 402, de manière à, comme précédemment, tourner l'objectif 402 pour que le plan P', conjugué du plan de positionnement P courant déterminé de la partie de main, se confonde avec le plan capteur.

Bien que la présente invention ait été décrite ci-dessus en référence à des modes de réalisation spécifiques, la présente invention n'est pas limitée aux modes de réalisation spécifiques, et les modifications qui se trouvent dans le champ d'application de la présente invention seront évidentes pour une personne versée dans l'art.

## Revendications

1. Procédé (E) de capture sans contact d'empreinte biométrique d'une partie de main (M) d'un utilisateur dans un volume d'acquisition, ledit procédé comportant les étapes suivantes :
- éclairage du volume d'acquisition (10) de manière à éclairer la partie de main de l'utilisateur ;
- acquisitions (E4a, E4b, E4c) successives d'au moins deux images bidimensionnelles de la partie de main, avec entre lesdites acquisitions successives desdites au moins deux images une modification d'orientation (E5a, E5b) d'un plan objet par rotation autour d'un axe pivot (Ap) ; lesdites au moins deux images comportant des points imagés de la partie de main communs auxdites au moins deux acquisitions ; ledit plan objet étant modifié en fonction d'une modification d'un plan courant déterminé (E3a, E3b, E3c) de positionnement (P) de la partie de main (M), correspondant au plan courant moyen dans lequel se situe ladite partie de main (M), pour chaque acquisition d'image bidimensionnelle;
- fusion (E6) des images bidimensionnelles acquises d'une surface à représenter de ladite partie de main (M) .

2. Procédé selon la revendication 1, dans lequel le procédé comporte, pour au moins une image bidimensionnelle acquise,
une étape de détermination (E2) d'information tridimensionnelle de localisation de ladite partie de main acquise dans ladite image bidimensionnelle ;
et une étape d'association (E7) entre l'information tridimensionnelle de localisation déterminée et ladite image bidimensionnelle acquise.

3. Procédé selon l'une quelconque des revendications précédentes, dans lequel la partie de main (M) comporte au moins deux doigts (1) ou une paume de main ; la surface à représenter s'étendant respectivement d'un premier bord d'ongle à un deuxième bord d'ongle via la pulpe de chaque doigt ou d'un premier bord de la paume à un deuxième bord de la paume via une face palmaire de la main.

4. Procédé selon l'une quelconque des revendications 2 ou 3, dans lequel le procédé comporte une étape (E8) de reconstitution d'une image déroulée de la surface à représenter de la partie de main par utilisation de l'information tridimensionnelle déterminée associée à l'image bidimensionnelle acquise.

5. Procédé selon l'une quelconque des revendications précédentes, dans lequel la modification de l'orientation dudit plan objet par rotation autour de l'axe de pivot (Ap) est obtenue par rotation du plan image autour d'un axe de rotation (Ap').

6. Procédé selon l'une quelconque des revendications précédentes, dans lequel le procédé comporte une étape de guidage de l'utilisateur invitant à un changement du plan de positionnement courant de la main de l'utilisateur vers un autre plan de positionnement suggéré de la main de l'utilisateur, notamment par affichage de positions de main virtuelle, lesdites positions de main virtuelle reflétant une rotation en roulis de ladite main virtuelle autour de l'axe pivot (Ap) par rapport au plan de positionnement courant de la main de l'utilisateur.

7. Procédé selon la revendication précédente dans lequel ledit plan de positionnement de la main de l'utilisateur est suggéré de manière à ce que lors des acquisitions (E4a, E4b, E4c) successives les plans successifs de positionnement déterminés (P) décrivent une plage de balayage angulaire en roulis d'au moins 10°, préférentiellement 15°.

8. Procédé selon l'une quelconque des revendications 2 à 7, dans lequel pour l'image bidimensionnelle acquise l'étape de détermination (E3a, E3b, E3c) du plan de positionnement (P) courant de la partie de main (M) est réalisée par analyse de l'information tridimensionnelle associée à ladite image bidimensionnelle acquise.

9. Moyen de stockage non transitoire d'informations, amovible ou non, partiellement ou totalement lisible par un ordinateur ou un microprocesseur comportant des instructions de code d'un programme d'ordinateur pour l'exécution de chacune des étapes du procédé selon l'une quelconque des revendications 1 à 8.

10. Système de capture (1) sans contact d'empreinte biométrique d'une partie de main (M) d'un utilisateur comprenant un compartiment utilisateur délimitant un volume d'acquisition (10) et un compartiment électronique (20), le volume d'acquisition (10) étant adapté pour recevoir ladite partie de main de l'utilisateur, le compartiment électronique (20) comprenant :
- un moyen d'éclairage (60) du volume d'acquisition de manière à éclairer la partie de main de l'utilisateur ;
- un dispositif d'imagerie bidimensionnel d'axe d'imagerie (A20) fixe, comprenant au moins deux éléments optiques dont un capteur (401) et un objectif (402), l'un des deux éléments optiques étant mobile en rotation autour de l'axe de rotation (Ap') du dispositif d'imagerie bidimensionnel, ledit dispositif d'imagerie étant apte à acquérir successivement au moins deux images de la partie de main, avec entre lesdites acquisitions successives desdites au moins deux images une modification d'orientation d'un plan objet par rotation autour d'un axe pivot (Ap) et obtenue par rotation dudit élément optique mobile (401); ledit système de capture (1) comprenant également :
- un module de détermination du plan de positionnement (P) de la partie de main, correspondant au plan courant moyen dans lequel se situe ladite partie de main (M);
- un module de modification du plan objet en fonction d'une modification du plan courant déterminé (E3a, E3b, E3c) de positionnement (P) de la partie de main (M) pour chaque acquisition d'image bidimensionnelle ;
- un module de fusion des images bidimensionnelles acquises d'une surface à représenter de ladite partie de main .

11. Système de capture (1) selon la revendication précédente, dans lequel l'élément optique mobile en rotation est le capteur (401).

12. Système de capture (1) selon l'une quelconque des revendications 10 à 11, comportant :
- un dispositif (50) d'acquisition tridimensionnelle d'informations tridimensionnelles du volume d'acquisition ;
- un module de de détermination (E2) d'information tridimensionnelle de localisation de ladite partie de main dans au moins une image bidimensionnelle acquise
- un module d'association entre l'information tridimensionnelle de localisation déterminée et ladite image bidimensionnelle acquise;
- un module de reconstitution d'une image déroulée de la surface à représenter de la partie de main par utilisation de l'information tridimensionnelle déterminée associée à l'image bidimensionnelle acquise.

13. Système de capture (1) selon l'une quelconque des revendication 10 à 12, dans lequel pour chaque plan courant déterminé de positionnement (P), le plan de l'élément optique mobile est modifié par rotation autour de l'axe de rotation dudit élément optique mobile (401), de manière à ce que le plan (P') conjugué du plan de positionnement (P) courant déterminé de la partie de main soit confondu avec un plan capteur.

14. Système de capture (1) selon l'une quelconque des revendications 10 à 13, dans lequel le volume d'acquisition (10) dans le compartiment utilisateur comprend une section d'entrée formée par une ouverture frontale (11) et présente une profondeur permettant l'insertion de la partie de main (M) depuis une extrémité des doigts, selon une direction dite longitudinale, ledit volume d'acquisition (10) étant de hauteur variable selon une direction transversale avec un rétrécissement central.

15. Système de capture (1) selon la revendication précédente, dans lequel la hauteur de l'ouverture frontale (11) au niveau du rétrécissement central mesure 30 mm à 60 mm.
